(19) Europäisches Patentamt / European Patent Office / Office européen des brevets

(11) **EP 2 701 111 A1**

(12) **EUROPEAN PATENT APPLICATION**

(43) Date of publication:
**26.02.2014 Bulletin 2014/09**

(51) Int Cl.:
***G06Q 30/00*** *(2012.01)*

(21) Application number: **12181792.8**

(22) Date of filing: **24.08.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Nederlandse Organisatie voor Toegepast -Natuurwetenschappelijk Onderzoek TNO 2628 VK Delft (NL)**

(72) Inventors:
• **van Deventer, Mattijs Oskar**
  **2628 VK Delft (NL)**
• **de Wit, Joost Jelmer**
  **2628 VK Delft (NL)**

(74) Representative: **Jansen, Cornelis Marinus et al V.O.**
  **Johan de Wittlaan 7**
  **2517 JR Den Haag (NL)**

(54) **Group composition based recommender system and method**

(57)     A recommender system stores rating values for items associated with identified users and groups of users and information representing users that are part of the groups of users. A correlation module computes correlations between a first group and other groups, by retrieving the information representing users in the first group and the other groups from the group composition storage system, retrieving the information representing rating values for items from a reference set associated with the users of the first group and the other groups and computing an aggregate of correlations between the rating values for items from the reference set associated with pairs of users, each pair comprising a respective one of the users of the first group and a respective one of the users form one of the other groups. A composition module configured to compute an aggregate of parameter values for the group from parameter values, such as rating values for items, associated with the other groups, wherein the other groups that are used to compute the aggregate of parameter values are selected and/or weighted dependent on the aggregate of correlations. By aggregated correlations as a group based similarity score, the adaptability of the recommender system to group composition is increased.

Fig.1

**Description**

Field of the invention

The invention relates to a recommender system and method, and to an electronic data access system and method that uses this recommender system and method.

Background

US 7,756,753 discloses a recommender system. Recommender systems can be part of electronic program guide based television viewing systems, audio or video on demand systems or search engines for example. The recommender system may be used to display a sorted list of selected television programs, electronic movies/music or electronic documents on the Internet, with controls to start play or retrieval of the television programs, movies or electronic documents. More generally, the recommender system computes user specific score values for individual items such as television programs, movies/music or electronic documents, the score values being useful to select and/or sort the items for display in the recommendation list. As used herein, the term score value (or more briefly score) will be used for a value that is used to select and/or sort items. The score values may be predictions of user rating values (or more briefly (user) ratings), a term that will be used for user dependent input about items. User rating values may be obtained directly, by explicit user input, or indirectly from observation of user behavior in relation to an item. Rating values may be values from a continuous range of numbers, from a set of integer numbers or indications of options from a discrete ordered set of options. Such indications may represent user selections from options with a set of labels like good/ reasonable/ mediocre/ bad for example.

In conventional recommender systems score value computation by content based scoring and collaborative filtering can be distinguished. Typically, content based scoring involves computation of the score value by weighing objective (i.e. user independent) values of attributes of items using user specific weights. The weights may be based on user input of a user profile, or accumulated from user rating values. Another alternative is to compute the score value of an item based on similarity with other items and the user's rating values of these other items. Collaborative filtering makes use of rating values from different individual users. This involves two steps: selection of users that are most similar to the current user and generation of the score value for an item for the current user from ratings of that item from similar users. In the first step the recommender system may select the most similar users on the basis of correlation between the rating values for a reference set of items from the current user and other users.

A problem arises when a recommendation for a group of one or more persons is needed for joint use of an item, for example to provide a recommendation list of movies that the group might want to retrieve for joint viewing. Group preferences can be handled by treating the group as another individual user and collecting a user profile or rating values from the group as a whole. However, if the group is formed ad hoc, the collection of a user profile or rating values from the group as a whole presents considerable overhead.

US 7,756,753 addresses the problem of computing a recommendation list for a group (referred to as a community recommendation). Wish lists from the individual group user in the group are used to define rating values, the wish lists indicating items that are desirable to the individual users, e.g. in the form of a rental queue of movies that the user wants to rent. Higher rating values are given to items that appear on the wish lists or more users. Joint recommendations are generated by passing a list of weighted items from the rental queue to the recommendations engine. The recommendations engine then generates a list of additional items that are collectively similar/related to the combined list but are not included in either rental queue.

W003105082 addresses the observation that combining the recommendation scores from different recommenders could enhance the recommendation made to a user. Accordingly, it provides for a plurality of fuzzy aggregation connectives are used to perform the fusion of recommenders for providing an enhanced efficiency for coming up with final recommendations of items such as TV shows, books to buy/read, movies to watch. W003105082 mentions a scenario wherein the recommenders are TV recommenders developed for different people. Each recommender is based on one person's preferences. When those people want to watch together, one final recommendation is needed. This recommendation is obtained by fusing the recommendations from individuals.

It has been found that the preferences of individual users may shift when they jointly watch and/or listen to items. For example, if a man watches a movie together with a woman, his preferences may be different from when he watches alone. Some items that receive a high score value for an individual user may be uninteresting for the group, leading to waste in the recommendation list. Similarly, some items that do not receive a high score value for any individual user may be highly uninteresting for the group, leading to an incomplete recommendation list. Hence there is a risk that the effectiveness of the recommender system is reduced, which may lead users to retrieve more items for mere inspection, or to the use of longer recommendation lists to enable users to make their own selection. The prior art only shows limited flexibility to adapt recommendations to group composition.

US 7,756,753 discloses some adaptations that could reduce these problems, such as suppression of items with unsuitable age ratings if the group contains children and the suppression of a movie that has already been seen by a member of the group. However, such measures provide only limited relief, because they address the possibility to adapt to group composition only under specific circumstances.

Summary

Among others, it is an object to provide for a more flexible way of adapting a recommender system and method to group composition.

A recommender system according to claim 1 is provided. Herein recommendations to be made for a group of persons, such as a group of two persons, are obtained using parameters that have been stored for other, similar groups. In order to select or weigh similar groups, the users of the group are paired to users of the other groups. Correlations between rating values from the paired users are computed. The correlations for the different users in the group are aggregated. The aggregate may be used as a similarity score between groups. In an embodiment, aggregation of the correlations comprises summing the correlations. The similarity score may be used to form parameters for the group by selecting or weighing parameters of the other groups according to their similarity score. In an embodiment, the parameters may be rating values provided by the other groups that may be used to predict ratings values for the group. In another embodiment, the parameters may be attribute values from the other groups that may be used to predict attribute values for the group, which can be used to evaluate items. By using a group based similarity score, the adaptability of the recommender system to group composition is increased.

In an embodiment, users in the group are paired to users in the other group in a plurality of different ways and aggregates of the correlations are computed for each way of pairing. A maximum of these aggregates may then be used as a similarity score. In this way uneven group composition can be automatically accounted for.

In an embodiment, the selected or weighed other groups are used in collaborative filtering, wherein rating values for an item from the other groups are used to determine a recommendation score value from the rating values from groups that have been found to be similar on the basis of the correlations. In other embodiments a selection or weight of similar groups may be used to aggregate other parameters of the similar groups, such as attribute values. The item may be an electronic data item from a storage system, such as a video program.

In an embodiment, recommendations score values for a plurality of items may be determined. These may be used to select and/or sort items in a recommendation list. The resulting list may be used to generate a control screen for receiving user selections of the items, for example in order to start play of a data item in response to reception of the selection.

Brief description of the drawing

These and other objects and advantageous aspects will become apparent from a description of exemplary embodiments, using the following figures.

Figure 1 shows an electronic data access system
Figure 2 shows a flow-chart of a recommendation method
Figure 3 shows a flow-chart of selection of similar groups

Detailed description of exemplary embodiments

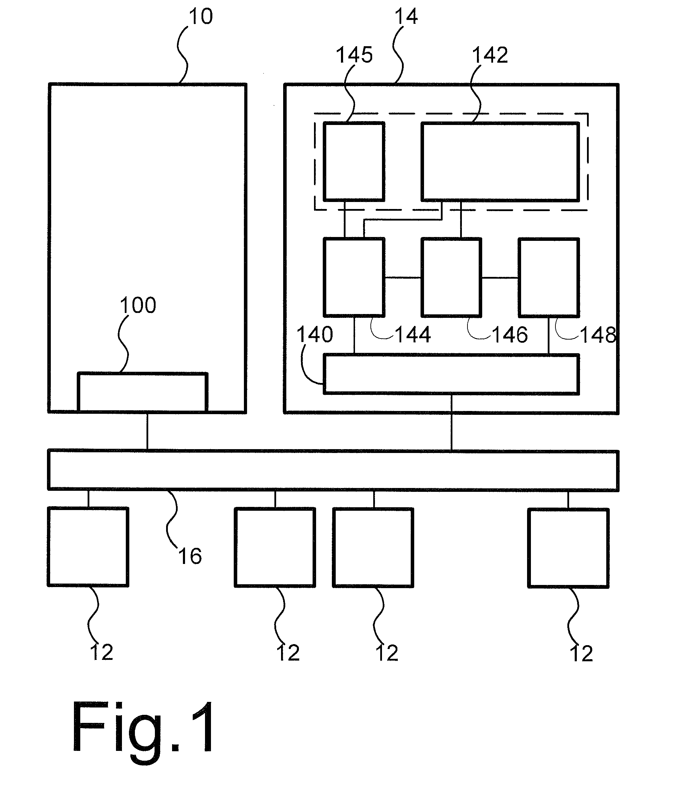

Figure 1 shows an electronic data access system, comprising a data store system 10, a plurality of user terminals 12, a recommender system 14 and a communication network 16 coupling the data store system 10, a plurality of user terminals 12, a recommender system 14. Although a plurality of user terminals 12 is shown, it should be appreciated that the distribution system may have only single user terminal 12, which could be coupled directly to recommender system 14, or even contain recommender system 14. User terminal 12 may comprise a network interface for communication with data store system 10 and recommender system 14. Furthermore, user terminal 12 may comprise a display screen for displaying recommendations from recommender system 14 and selected video data from data store system 10. Data store system 10 may comprise a plurality of servers, or it may be a single storage device. Data store system 10 comprises a network interface unit 100 configured to supply selectable electronic data items from electronic storage devices in data store system 10 to user terminals 12. Selection may be based on addresses of the items.

Recommender system 14 comprises a network interface unit 140 for communication with user terminals 12, a rating storage system 142 for storing user's rating values, a user correlation module 144, a score value composition module 146, an item selection module 148 and a group composition storage system 145. User correlation module 144 and score value composition module 146 may be implemented using a programmable computer system and software modules with instructions for the programmable computer system to make it perform the functions of user correlation module 144 and score value composition module 146. User correlation module 144 has inputs coupled to network interface 140, rating storage 142 and group composition storage system 145. Score value composition module 146 has inputs coupled to user correlation module 144 and rating storage 142. Item selection module 148 has an input coupled to score value composition module 146 and an output coupled to network interface 140.

Rating storage system 142 comprises stored information about rating values for data items from data store system 10 from users and groups of users. Data representing a table of records (m, i, R) may be stored for example, with fields for an identifier m of a data item, an identifier i of a user or group of users and a rating value R=R(i,m) of the data item m from the user or group of users i. Group composition storage system 145 comprises stored information about the composition of groups. Data representing a table of records (g, i1, i2) may be stored for example, with fields for an identifier g of a group and identifiers i1 and i2 of members of the group. In an embodiment rating storage system 142 and group composition storage system 145 may be implemented using a common storage system containing both rating values and group composition data. The storage system or systems may be a single memory device, or a combination of such devices. Rating storage system 142 and group composition storage system 145 will also be referred to as rating storage 142 and group composition storage 145.

In operation, a user terminal 12 sends a request message to recommender system 14, requesting a recommendation of data items in data store system 10. The request identifies a user or group of users, for example by including identifiers of the users in the request message. User terminal 12 may have an input to receive such identifiers, for example by reading user's smart cards, biometric recognition etc. Alternatively, user terminal 12 may be associated with a predetermined group.

In response to the request recommender system 14 computes rating values of data items for the user or group of users. Recommender system 14 selects and optionally sorts a subset of the data items based on the rating values. Recommender system 14 transmits information indicating the selected data items, optionally the rating values and address information for retrieving the selected data items from data store system 10 to the user terminal 12 that sent the requests. The user terminal 12 displays a list of the selected data items and waits for selection of a data item from the list. Upon receiving a selection user terminal 12 uses the address of the selected data item to retrieve the data item from storage system 10. The data item may contain video data for example, storage system 10 starting delivery of a video stream to user terminal 12 in response to the retrieval. User terminal 12 displays the retrieved data item.

In an embodiment rating storage 142 stores rating values R(i, m) for items indexed by item identifiers m, from users indexed by user identifiers i. In addition embodiment rating storage 142 stores rating values R(g, m) for the items indexed by m, from groups of users indexed by group identifiers g. Group composition storage system 145 stores information that identifies the identifiers of the members of each group g. For groups that consist of pairs of users, records (g, i1, i2) may be stored for example, containing a group identifier g and the identifiers i1, i2 of the users in the group.

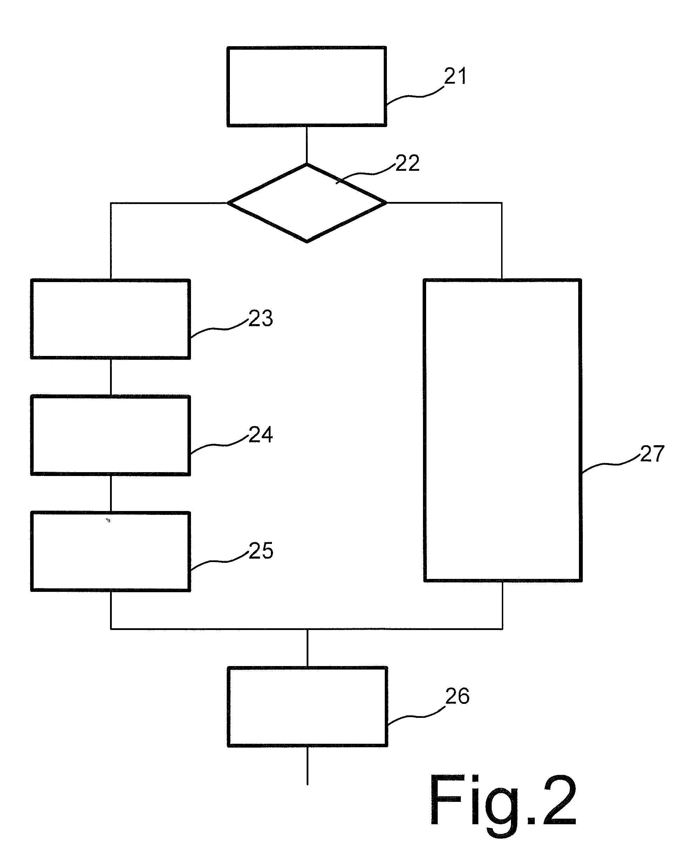

Figure 2 shows a flow chart of computation of rating values of data items for a group of users by recommender system 14. In a first step 21, user correlation module 144 receives an identifier of a user or identifiers of the users in a group from a user terminal 12 via network interface 140. Alternatively, user correlation module 144 may retrieve stored identifiers of the group members based on a group identifier, or information about the user terminal.

In a second step 22, user correlation module 144 proceeds to a first branch if there is only one user and to a second branch if a group of users was received. The first branch corresponds to conventional collaborative filtering. The first branch comprises a third step 23 wherein user correlation module 144 retrieves rating values for a set of reference items S from the user from rating storage 142. The set of reference items S defines rating vectors RV(i) = { R(i, m) for all items m in S } for the user i.

The first branch comprises a fourth step 24, wherein user correlation module 144 retrieves rating vectors RV(j) for the set of reference items S from other users j (j unequal i) from rating storage 142. User correlation module 144 computes correlations C(RV(i), RV(j)) between these vectors RV(j) and the rating vector RV(i) from the user i. A known Pearson correlation may be used for example. The Pearson correlation is computed by (a) computing a sum of products $(R(i,m)-Av(m))*(R(j,m)-Av(m))$, summed over m, where $Av(m)$ is the average rating value for the item m taken over all users, (b) computing a product of sums of $(R(i,m)-Av(m))^2$ and $(R(j,m)-Av(m))^2$, summed over m, and (c) dividing the sum of product by a square root of the product of sums. However, alternatively other types of correlation may be used.

The first branch comprises a fifth step 25, wherein user correlation module 144 selects a predetermined number of users j having the highest correlations with the user i, that is, with higher correlations than any other users j'. Alternatively, user correlation module 144 may select users j having correlations above a threshold value, for example a predetermined threshold value. Alternatively, the threshold may be adapted, dependent on the computed correlations.

After fifth step 25, score value composition module 146 executes a sixth step 26, wherein score value composition module 146 computes score values for other items n than the items m in the reference set. To compute a score value for an item n, score value composition module 146 retrieves the rating values R(j, n) for that item n from the users j having the highest correlations. Correlation module 144 aggregates these rating values R(j, n), for example by averaging over the users j.

Although an embodiment has been described wherein fifth step 25 comprises selecting a predetermined number of users and sixth step 26 comprises aggregating over the selected users, it should be appreciated that other ways of combining information from different users may be used. For example, weights W(j) may be assigned to the different users dependent on the correlation values (higher weights being assigned when the score values indicate more correlation) and the assigned weights W(j) may be used to aggregate rating values for an item R(j,n) weighted by these weighting values. In fact the selection of a predetermined number of users with the highest correlation can be said to be a form of weighting, with zero weight being assigned to users outside said predetermined number. Different weights may be assigned also to different users within the predetermined number. Various ways of aggregating rating values are described in an article by Gediminas Adomavicius and Alexander Tuzhilin, titles 'Towards the next generation of recommender systems: A survey of the state-of-the-art and possible extensions", published in the IEEE Transactions on Knowledge and Data Engineering 17, 2005.

After second step 22, user correlation module 144 proceeds to the second branch if a group of users g was received in first step 21. The second branch comprises a seventh step 27, wherein a set of most similar groups g' is selected, that are most similar to g. Subsequently, recommender system 14 proceeds to sixth step 26. To compute a score value for an item n, score value composition module 146 retrieves the rating values for that item n from the most similar users groups g'. Score value composition module 146 aggregates these rating values.

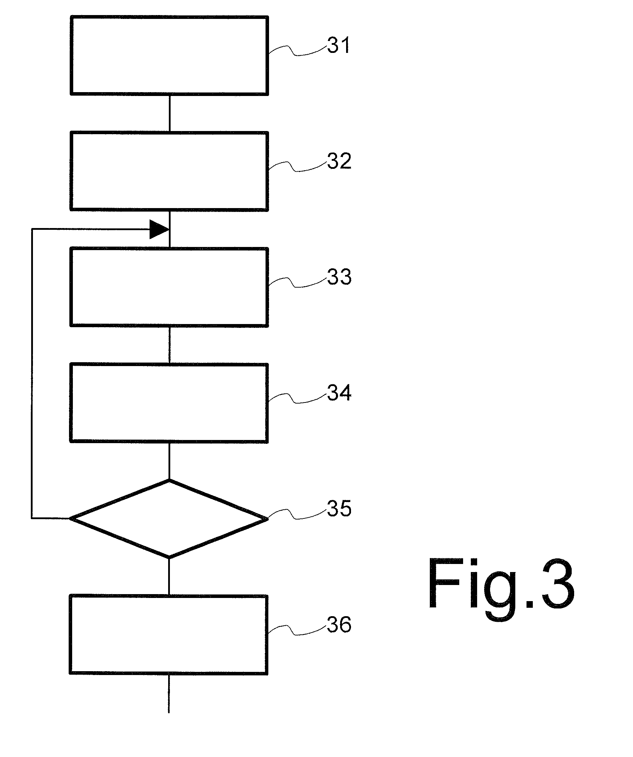

Figure 3 shows a flow chart of the computation of the set of most similar groups in seventh step 27. In a first step 31 user correlation module 144 retrieves rating vectors RV(i) for each of the plurality users i in the group g. This step is similar to third step 23 of the branch for single users, except that a plurality of rating vectors is retrieved.

In a second step 32, user correlation module 144 selects another group of users g'. In a third step 33, user correlation module 144 retrieves rating vectors RV(j) for the set of reference items S from users in the other group g' from rating storage 142.

In a fourth step 34, user correlation module 144 computes a similarity score T between the groups g and g'. In an embodiment this is done according to

$$T\,(g,\ g') = \mathrm{Max}\,\{\qquad C(RV(i1),RV(j1)) + C(RV(i2),RV(j2)),$$

$$C(RV(i1),RV(j2)) + C(RV(i2),RV(j1))\,\}$$

Herein, wherein i1 and i2 are the identifiers of the users in the group g and j1 and j2 are the identifiers of the users in the group g'. In other words, the similarity is the maximum of two sub-similarities, obtained using a same computation, which forms a sum of the correlations between the rating vectors. The sub-similarities are obtained by applying the computation with users i1, i2 being correlated with users j1, j2 respectively on one hand and correlated with users j2, j1 respectively on the other hand.

In a fifth step 35 user correlation module 144 tests whether a further group can be found. If so, correlation module 144 repeats the computation of third and fourth step 33, 34 for the other group.

Once user correlation module 144 has computed similarity scores for all groups g', correlation module 144 executes a sixth step 36 wherein correlation module 144 selects a predetermined number of groups g' with the highest similarity scores, or groups g' having similarity scores above a threshold value. This step is similar to fifth step 25 of figure 2 for individual users, except that similarity scores T(g, g') are used instead of correlations. In an embodiment the predetermined number is one, only the most similar group being selected. Alternatively, the predetermined number may be greater than one. This makes it possible to obtain ratings values for more items.

From sixth step 36 of figure 3, recommender system 14 proceeds to sixth step 26 of figure 2, wherein score value composition module 146 retrieves the rating values for an item n from the most similar groups g'. Score value composition module 146 aggregates these rating values. The operation of score value composition module 146 for groups is similar to that for individual users, except that rating values from user groups g' are retrieved and aggregated rather than from individual users. As is known per se for individual users, the rating values from different groups may be normalized before they are aggregated.

Although an example has been described wherein selection of similar groups and computation of the score for an item are separate actions, this need not be so. For example, the selection of similar groups may be adapted to the number of rating values from the groups that are available, a large number of similar groups being selected when less rating values are available. This makes it possible to obtain ratings values for more items.

Recommender system 14 may repeat the computation of score values for a plurality of different items n. It should be noted that for each item this needs to be done only once for the group and not once for each individual user in the group, which reduces the time and bandwidth needed to access the rating values. In an embodiment, item selection module 148 uses these computed score values to select a predetermined number of items with the highest computed score values, i.e. higher score values than the score values for any other items. In another embodiment item selection module 148 uses these computed score values to select items with score values that exceed a threshold.

In these and other embodiments, item selection module 148 may sort the items in order of the score values. Item selection module 148 sends information that identifies the selected and optionally sorted items to user terminal 12, together with address information for retrieving the items from data store system 10. Item selection module 148 may comprise an address storage system that comprises addresses associated with identifiers of the items for this purpose. The address storage system may be part of a storage system, e.g. a storage device that also contains rating storage system 142 and group composition storage system 145. The selected and optionally sorted items may be used to construct an interface screen display, for example in the form of a list of hyperlinks, or image areas.. User terminal 12 may be configured to allow user selection of these hyperlinks or area, for example by means of cursor movement commands and a command that confirms selection. User terminal 12 may be configured to retrieve the selected item from data store system 10, using an address or identifier supplied by recommender system 14.

Where the actions of correlation module 144, score value composition module 146 and recommender system 14 have been described in relation to the flow charts, this may be understood to mean that recommender system 14 comprises programs of instructions for a programmable computer system to make that programmable computer system execute that described steps. Machine readable code of these programs of instructions may be provided stored in a computer readable medium such as a semi-conductor memory, a magnetic or optical disk etc.

Although an example of application of the similarity scores between different groups to selection of retrievable data items has been given, it should be appreciated that alternatively, or in addition, the similarity scores may be used in other ways. For example, the similarity scores may be used for the computation of values of attributes of a group g from stored values of the attributes of other groups g'. A storage system wherein such attributes are stored may be provided. For example an average, possibly a weighted average, of the attribute values of other groups g' that have been selected in sixth step 36 may be computed. Instead it may be determined which value of an attribute is stored for a majority of the selected other groups g' and that value may be used for the group g. In an embodiment, the recommender system may be configured to determine such attribute values and use them to weigh further attribute values for a data item, in a process to form a score for that data item for the group g. In other embodiments, the attribute values that have been determined in this way may be used to control parameter settings of user terminal, for example to select whether subtitles should be displayed, or to set a sound volume.

As should be noted, the described method of computing the similarity score T applies to groups of two users. In an embodiment only groups of two users are used. In another embodiment, groups of more users may be allowed as well. In a further embodiment, execution of second step 32 of figure 3 by user correlation module 144 comprises comparing the size of the group and the other groups and selecting another group g' only if it has thethe same size as the group g. In this case, the similarity score may be computed as a maximum of sub-similarity scores obtained by pairing the users in the group g in different ways to users in the group g' and summing the correlations between the paired users.

Although an embodiment has been described wherein all other groups are considered in third and fourth steps 33, 34, this may not be necessary. In an embodiment only a predetermined number of other groups may be considered in third and fourth steps 33, 34, which may selected at random for example. In another embodiment, profile information may be provided for each group. This may include a code for a group type for example, or values of attributes of the group and/or its members. In this case groups g' may be selected based on group type information, for example by matching type codes, or comparing attributes. In an embodiment, third and fourth steps 33, 34 are executed only for the selected groups g'.

Although an embodiment has been described wherein the similarity score T (g, g') is a maximum of terms obtained by pairing users in different ways, it should be appreciated that alternatively a single predetermined pairing may be used. In an embodiment the information that identifies the users in a group may comprise information that identify roles of the different users in the groups. records (g, i, r) may be provided for example, indicating that the user with identifier i is a member of the group with identifier g in the role indicated by a code r. The role may indicate whether the user i is the man or the woman in a male-female couple for example. When role information is provided, it may suffice to compute similarity score as the sum of correlations for group members with corresponding roles.

Although an embodiment has been described wherein a straight sum of correlations obtained for the different users in the group is used, it should be appreciated that is only one example of aggregating the correlations. In another embodiment a weighted sum may be used, predetermined weights may be stored for different users in the group for this purpose. For example, if the group contains a parent and a child, a greater weight may be prestored for the child than for the parent or vice versa.

Although an embodiment has been described wherein the similarity score T (g, g') is determined from a maximum of sums of correlations for different user pairings, it should be appreciated that alternatively other ways of determining the similarity score T (g, g') may be used. For example, an average may be used.

In an embodiment recommender system 14 is a server that may be located remotely from a user terminal 12 where the recommendation is used. However, in an alternatively embodiment recommender system 14 may be part of a user terminal 12. In a further embodiment, the storage systems for rating and/or group composition may be remote from the terminal, the recommender system 14 in the terminal accessing these storage systems via the network.

**Claims**

1. A recommender system, comprising

   - rating storage system for storing information representing rating values for items associated with identified users and groups of users;
   - group composition storage system for storing information representing users that are part of the groups of users;
   - a correlation module configured to compute correlations between a first group and other groups, by

      - retrieving the information representing users in the first group and the other groups from the group composition storage system,
      - retrieving the information representing rating values for items from a reference set associated with the users of the first group and the other groups;
      - computing an aggregate of correlations between the rating values for items from the reference set associated with pairs of users, each pair comprising a respective one of the users of the first group and a respective one of the users form one of the other groups;

   - a composition module configured to compute an aggregate of parameter values for the group, from parameter values associated with the other groups, wherein the other groups that are used to compute the aggregate of parameter values are selected and/or weighted dependent on the aggregate of correlations.

2. A recommender system according to claim 1, wherein the correlation module is configured to compute a plurality of alternative aggregates of correlations, each for a different sets of pairs, different sets of pairs combining the users of the first group differently with users form one of the other groups in the pairs, the score value composition module being configured to compute the aggregate of rating values selected and/or weighted dependent on a maximum of the alternative aggregates of correlations.

3. A recommender system according to claim 1 or 2, wherein the composition module is a score composition module for computing a collaborative rating score, the parameter values being rating values for a further item, the score composition module being configured to compute an aggregate of rating values from rating values for the further item associated with the other groups, wherein the other groups that are used to compute the aggregate of rating values are selected and/or weighted dependent on the aggregate of correlations.

4. A recommender system according to claim 3, having an interface for coupling to a user terminal, the score value composition module being configured to compute said aggregate of rating values for a plurality of further items, the recommender system comprising an item selection module configured to make a selection from the plurality of the items based on the aggregate of rating values computed for the plurality of the further items and to transmit an indication of the selection to the user terminal, together with addresses for access to the selected further items from a data store system.

5. An electronic data access system, comprising the recommender system according to claim 4 and a data storage system for storing the items, the data storage system comprising an interface unit configured to supply an item to the user terminal in response to transmission of the address from the user terminal to the data storage system.

6. A machine implemented method of generation recommendations, the method, wherein processing a request for a recommendation for a first group of users comprises

   - a computer system retrieving information representing users in the first group and other groups from a group composition storage system,
   - the computer system retrieving information representing rating values for items from a reference set associated with the users of the first group and the other groups;

- the computer system computing an aggregate of correlations between the rating values for items from the reference set associated with pairs of users, each pair comprising a respective one of the users of the first group and a respective one of the users form one of the other groups;
- the computer system computing an aggregate of parameter values for the group, from parameter values associated with the other groups, wherein the other groups that are used to compute the aggregate of parameter values are selected and/or weighted dependent on the aggregate of correlations.

7. A method according to claim 6, comprising

- computing a plurality of alternative aggregates of correlation, each for a different sets of pairs, different sets of pairs combining the users of the first group differently with users form one of the other groups in the pairs,
- computing the aggregate of rating values being selected and/or weighted dependent on a maximum of the alternative aggregates of correlations.

8. A method according to claim 6 or 7, comprising computing an aggregate of rating values for a further item from rating values for the further item associated with the other groups, wherein the other groups that are used to compute the aggregate of rating values are selected and/or weighted dependent on the aggregate of correlations.

9. A method according to claim 8, comprising

- computing said aggregate of rating values for a plurality of further items,
- making a selection from the plurality of the items based on the aggregate of rating values computed for the plurality of the further items and
- transmitting an indication of the selection to a user terminal, together with addresses for access to the selected further items from a data store system.

10. A computer program product, comprising a program of instructions for a programmable computer system that, when executed by the programmable computer system will cause the programmable computer system to execute the method of any one of claims 6-9.

Fig.1

Fig.2

Fig.3

Europäisches
Patentamt

European
Patent Office

Office européen
des brevets

## EUROPEAN SEARCH REPORT

**Application Number**

EP 12 18 1792

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | US 7 756 753 B1 (MCFARLAND ROSS W [US]) 13 July 2010 (2010-07-13) * the whole document * | 1-10 | INV. G06Q30/00 |
| X,D | WO 03/105082 A2 (KONINKL PHILIPS ELECTRONICS NV [NL]; PHILIPS CORP [US]) 18 December 2003 (2003-12-18) * the whole document * | 1-10 | |
| X,D | ADOMAVICIUS G ET AL: "Toward the Next Generation of Recommender Systems: A Survey of the State-of-the-Art and Possible Extensions", IEEE TRANSACTIONS ON KNOWLEDGE AND DATA ENGINEERING, IEEE SERVICE CENTER, LOS ALAMITOS, CA, US, vol. 17, no. 6, 1 June 2005 (2005-06-01), pages 734-749, XP011130675, ISSN: 1041-4347, DOI: 10.1109/TKDE.2005.99 * the whole document * | 1-10 | |

TECHNICAL FIELDS
SEARCHED (IPC)

G06Q

The present search report has been drawn up for all claims

| Place of search | Date of completion of the search | Examiner |
|---|---|---|
| Munich | 6 February 2013 | Neppel, Clara |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**                    EP 12 18 1792

This annex lists the patent family members relating to the patent documents cited in the above-mentioned European search report.
The members are as contained in the European Patent Office EDP file on
The European Patent Office is in no way liable for these particulars which are merely given for the purpose of information.

06-02-2013

| Patent document cited in search report | | | Publication date | Patent family member(s) | | Publication date |
|---|---|---|---|---|---|---|
| US 7756753 | B1 | | 13-07-2010 | NONE | | |
| WO 03105082 | A2 | | 18-12-2003 | AU | 2003228055 A1 | 22-12-2003 |
| | | | | CN | 1666227 A | 07-09-2005 |
| | | | | EP | 1516285 A2 | 23-03-2005 |
| | | | | JP | 2005529415 A | 29-09-2005 |
| | | | | US | 2003229896 A1 | 11-12-2003 |
| | | | | WO | 03105082 A2 | 18-12-2003 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7756753 B

- WO 03105082 A

**Non-patent literature cited in the description**

- **GEDIMINAS ADOMAVICIUS ; ALEXANDER TUZHILIN.** Towards the next generation of recommender systems: A survey of the state-of-the-art and possible extensions. *IEEE Transactions on Knowledge and Data Engineering,* 2005, 17